# EUROPEAN PATENT SPECIFICATION

(11) **EP 3 562 194 B1**
(45) Date of publication and mention of the grant of the patent: **28.07.2021**
(21) Application number: 18168670.0
(22) Date of filing: 23.04.2018
(51) Int. Cl.: H04W 24/02, H04W 48/18

(54) **METHOD FOR IDENTIFYING AT LEAST ONE NETWORK SLICE CONFIGURATION OF A MOBILE NETWORK, COMMUNICATION SYSTEM, AND AUTOMATION SYSTEM**
VERFAHREN ZUR IDENTIFIZIERUNG VON MINDESTENS EINER NETZWERK-SLICE-KONFIGURATION EINES MOBILEN NETZWERKS, KOMMUNIKATIONSSYSTEM UND AUTOMATISIERUNGSSYSTEM
PROCÉDÉ D'IDENTIFICATION D'AU MOINS UNE CONFIGURATION DE TRANCHE DE RÉSEAU D'UN RÉSEAU MOBILE, SYSTÈME DE COMMUNICATION ET SYSTÈME D'AUTOMATISATION

(43) Date of publication of application: 30.10.2019
(73) Proprietor: Siemens Aktiengesellschaft, 80333 München (DE)
(72) Inventor: Falk, Rainer, 85586 Poing (DE)

(56) References cited:
- WO-A1-2017/119844
- WO-A1-2018/069852
- US-A1- 2009 319 594
- US-A1- 2016 353 367
- US-A1- 2017 054 595
- US-B1- 8 468 330
- LG ELECTRONICS INC: "Evaluation on solution 1.11", 3GPP DRAFT; S2-165619_EVALUATION ON SOL 1.11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Kaohsiung City, Taiwan; 20161017 - 20161021 16 October 2016 (2016-10-16), XP051155206, Retrieved from the Internet: URL:http://www.3gpp.org/ftp/Meetings_3GPP_ SYNC/SA2/Docs/ [retrieved on 2016-10-16]

## Description

### Technical Field

The invention relates to the field of mobile networks and mobile communication, and more particularly, is directed to a method for identifying at least one network slice configuration of a mobile network, methods for operating a mobile network adapted for implementing one or more network slices, a node for implementing a management function for a mobile network, a method for operating a customer node, a customer node for a mobile network, an automation system, and a communication systems.

### Background

Mobile communication is usually based on a mobile network and a customer node, that may also be called user equipment or mobile termination, accessing and/or connecting to the mobile network. In particular, the mobile network may provide several functions and parameters to the customer node such as a data transfer function, a channel for voice transmission, a function for configuring communication modes, a communication service management function, and their respective parameters, as well as several parameters defining a state, mode or setup of the mobile network and/or the customer node e.g. communication protocols, data transfer rates, an address space of the mobile network, and/or an address of the customer node. Modern mobile networks, in particular next generation networks as 3GPP 5th generation network, may be adapted for implementing network slicing. Network slicing allows to transform the static mobile network to one or more logical mobile networks or partitions or subnets of the mobile network, wherein those logical networks, subnets or partitions - i.e. network slices - may be isolated from each other, may have defined and/or guaranteed resources, may serve a particular purpose or service category, may be individually provided to certain customers, and/or may have an optimised topology. Thereby, one may provide different network slices for different purposes like video streaming, which requires high data rates, speech, which requires low latency, and/or data logging - i.e. for internet of things - which requires high availability.

For providing an instance of a network slice, this network slice has to be configured. Generally, a user - i.e. a person or system which uses a customer node, in particular for communicating via the mobile network - may require a certain/predetermined network slice configuration - or accordingly the respective network slice instance -, modify this configuration, and/or remove the network slice. Moreover, such a modern mobile network may provide an instance of a network slice and the user may need some information about the provided network slice instance, in particular to properly communicate with the mobile network, a node of it, another customer node, and/or another system via the mobile network.

For management and orchestration of network slicing for next generation networks the following documents of the 3rd generation partnership project (3GPP) are known: 3GPP TR 28.801 and 3GPP TR 33.811. Furthermore, the following documents are known: 3GPP TR 21.905, 3GPP TR 23.799, 3GPP TR 22.864, NGMN 5G WS PI, NGMN Alliance, 3GPP TS 28.500, 3GPP TS 23.501, 3GPP TR 38.801, 3GPP TS 32.130, 3GPP TS 23.502, 3GPP TS 32.101, 3GPP TR 21.905, 3GPP TS28.530, 3GPP TS22.261, 3GPP TR28.801, 3GPP TR 21.905, 3GPP TS28.530, 3GPP TS28.531, 3GPP TS22.261, 3GPP TR28.801. Moreover, the following patent documents are known: US 8,531,247 B2, US 8,892,616 B2, US 8,300,811 B2, US 9,147,088 B2, US 9584311 B2, EP 2976707 B1, EP 2 605 445 B1, EP 2 870 565 A1, EP 2 891 102 A1, WO 2017137256 A1, EP 2870565 B1, EP 3028140 B1, EP 17175275, and US 8 843 761 B2.

WO 2018/069852 A1 discloses a method for use in a core network node comprising obtaining a mapping of core network slice identifiers to radio access network slice identifiers.

US 2017/0054595 A1 discloses systems and methods for management of network slices in a communication network.

WO 2017/119844 A1 discloses a method to enable network slice aware access control in a wireless communication system.

US 2009/319594 A1 relates to interfacing definition of messages to be exchanged and refers to providing a unique identifier thereof as hash of a canonical form.

US 2016/353367 discloses receiving a request for a new network slice instance indicating that there is a configuration of parameters associated with each network slice.

3GPP S2-165619 discloses the broadcast of the network slice ID.

### Summary of the Invention

It is an object of the invention to improve mobile networks and/or corresponding customer nodes, and more particularly, to facilitate network slicing and/or improve the security of network slices and/or its applications.

A solution to this problem is provided by the teaching of each of the independent claims, specifically by a method for operating a mobile network according to claim 1, , and a node for implementing a management function for a mobile network according to claim 4. Various embodiments, advantageous modifications and further improvements are provided, in particular, by the teachings of the dependent claims.

A first aspect not falling under the scope of the claims is directed to a method for identifying at least one network slice configuration of a mobile network. The mobile network is adapted for implementing network slicing with one or more network slices and adapted to provide at least one network slice instance, which is an instance of one of the network slices and which is defined by the at least one network slice configuration. The method comprises receiving the at least one network slice configuration. The method further comprises providing a mapping from a set of network slice configurations to a set of network slice configuration identifiers. Furthermore, the method comprises determining a network slice configuration identifier for the at least one network slice configuration by applying the mapping to the at least one network slice configuration.

Within the meaning of the present disclosure a network slice may refer to a set of network functions and the resources for these network functions. In particular, a network slice may comprise one or more layers such as a service layer, a network slice layer and a resource layer. The specific layers and their requirements may be implemented in accordance with 3GPP TR 23.799. A network slice may be used for transmitting and/or receiving user plane data and/or control plane data. Control data of a cyber-physical system connected to or comprising a customer device may be transmitted as user plane data over a network slice by the customer node.

Within the meaning of the present disclosure a network slice configuration may refer to any information or data defining the set of network functions and the resources for these network functions for a network slice. In particular, a network slice configuration may be in the form of a configuration file. In some implementations such a network slice configuration may be generated or derived from a network slice template, which describes the structure and configuration of a network slice.

Within the meaning of the present disclosure a network slice instance may refer to an instance of a particular network slice, which is defined by a particular network slice configuration. More specifically, when a network slice is instantiated according to a network slice configuration the set of network functions and the resources for these network functions are arranged and configured, forming a complete logical network to meet the network slice configuration.

An advantage of determining the network slice configuration identifier for the at least one network slice configuration may particularly be, that the at least one network slice configuration may be identified by the network slice configuration identifier, thus the at least one network slice configuration may be abstracted from the network slice configuration identifier, whereby network slicing and/or management of network slices and its instances may be facilitated. Moreover, applying the mapping and identifying the network slice configuration by the network slice configuration identifier allows reducing the computational complexity and/or computational effort for such an identification. Thereby, the required resources may be reduced, which allows to improve a mobile network adapted to identify at least one network slice configuration.

According to some embodiments the method may be adapted for receiving at least one network slice subnet configuration and accordingly for determining a network slice subnet configuration identifier. Thereby, also network slice subnet configurations may be identified by an according identifier.

Within the meaning of the present disclosure a network slice subnet configuration or a network slice subnet instance may refer to a network slice configuration or a network slice instance, accordingly. In particular, a network slice subnet may refer to a subset of network functions and the resources for these network functions, which correspond to a set of network functions and their resources for these network functions of a network slice instance, the network slice subnet being a subnet of the network slice.

The mapping of the method comprises respectively computing a hash value of the mapped network slice configurations. The overall network slice configuration may be hashed, or only a part of the network slice configuration may be hashed to determine the network slice identifier. According to some advantageous modifications, the hash value may be computed using a cryptographic hash function. This has the advantage that a cryptographic identifier for a network slice is determined that is (statistically) unique for a given network slice configuration. The cryptographic network slice identifier identifies a certain network slice configuration reliably. According to some advantageous modifications the hash function may be implemented by an SHA-2 algorithm, an SHA-3 algorithm and/or a RIPEMD algorithm. Thereby, an arbitrary form and/or an arbitrary length of the at least one network slice configuration - i.e. being in the form of a configuration file or in the form of setpoint values or actual values of the mobile network - may be mapped to a defined form of information, in particular having a defined length and/or data structure. In a variant, the output of the hash algorithm may be truncated to determine the network slice identifier.

Within the meaning of the present disclosure the term "comprising" may refer to a first mean comprising a second mean - i.e. the second mean being a part of the first mean. "Comprising" may also refer to the first mean at least essentially consisting of a second mean. Moreover, "comprising" may also refer to the first mean being implemented by the second mean. Moreover, a first mean comprising a second mean and a further mean may consist of or depend on both, the second mean and the further mean.

According to some embodiments the elements of the set of network slice configuration identifiers each have a predetermined maximum length. According to some advantageous modifications the predetermined maximum length is less than the largest maximum length of the elements of the set of network slice configurations. Additionally or alternatively the elements of the set of network slice configuration identifiers may also have predetermined length. In particular, these network slice configuration identifiers may have a length of 64, 128, 192 or 256 bits. Thereby, all of these network slice configurations may advantageously be mapped to respective identifiers which have a defined data form, structure, and/or length. In this advantageous way network slicing and especially its configuration may be facilitated. Moreover, in particular, by limiting the maximum length - i.e. mapping the network slice configurations in such a way that the yielded network slice configuration identifiers have a predetermined maximum length, which is less than the maximum length of the network slice configurations, allows reducing the required amount of data to be transferred on configuring network slices.

According to some embodiments the method may further comprise determining a canonical form of the at least one network slice configuration. Furthermore, the method may comprise applying the mapping to the canonical form. This may advantageously allow to determine the network slice configuration identifier independently from the actual, possibly many forms or representations of the at least one network slice configuration.

Additionally or alternatively, in some embodiments, the method may further comprise establishing meta data. The meta data may, in particular, comprise a creation time code, a modification time code, a version and/or an identifier of a creator of the at least one network slice configuration. Furthermore, the method may comprise extending the at least one network slice configuration and/or extending the network slice configuration identifier by the meta data. Thereby, the at least one network slice configuration may be further specified or defined by the meta data, which particularly may facilitate network slicing and/or enhance security of a customer node requiring a specific network slice configuration. Moreover, if particular when the mapping is not injective, possible collisions of different network slice configuration resulting in same network configuration identifiers may be alleviated or avoided. Thus, in particular, a network slice configuration may be uniquely identified by its network slice configuration identifier.

Correspondingly, the at least one network slice configuration or the network slice configuration identifier may comprise meta data.

A second aspect, not falling under the scope of the claims is directed to a method for operating a mobile network, wherein the mobile network is adapted for implementing one or more network slices. The method comprises receiving a configuration request. The method further comprises establishing at least one network slice configuration. The method further comprises providing at least one network slice instance being an instance of one of the network slices and being defined by the at least one network slice configuration. The method further comprises applying the method for identifying the at least one network slice configuration according to the first aspect to the at least one network slice configuration.

The advantageous modifications, and further improvements as already described in detail above in connection with the first aspect as well as potential benefits and advantages also apply correspondingly to the method for operating a mobile network according to the invention. Furthermore, an advantage of applying the method for identifying at least one network slice configuration to the at least one network slice configuration may particularly be, that the at least one network slice instance, which is provided by the mobile network, may be identified by the respective identifier yielded by the method for identifying at least one network slice configuration.

A third aspect is directed to a method for operating a mobile network, wherein the mobile network is adapted for implementing one or more network slices. The method comprises receiving a configuration request, wherein the configuration request comprises a further network slice configuration identifier. The method further comprises establishing a further network slice configuration, such that applying the method for identifying at least one network slice configuration according to the first aspect to the further network slice configuration yields the further network slice configuration identifier of the configuration request. The method further comprises providing a further network slice instance, wherein the further network slice instance is an instance of one of the network slices and is defined by the further network slice configuration.

The embodiments, advantageous modifications, and further improvements as already described in detail above in connection with the preceding aspects of the invention as well as potential benefits and advantages also apply to the method for operating a mobile network according to the invention, correspondingly. Moreover, an advantage of establishing the further network slice configuration and providing a corresponding further network slice instance based on the configuration request, may particularly be, that the further network slice configuration may specifically be defined or indicated by the further network slice configuration identifier. In this advantageous way data transfer - i.e. the configuration request - may be structured and/or the amount of data required for the specifying the configuration may be reduced. Furthermore, this advantageously allows to reduce the complexity and/or the required data transfer for configuring a certain network slice instance. Therefore, in particular, resources of the mobile network and/or customer node transmitting the configuration request may be used more efficiently, and thus, in particular, network slicing may be facilitated.

A fourth aspect, is directed to a node, in particular of a mobile network, for implementing a management function for a mobile network, wherein the method is implemented as a communication service management function (CSMF) or also a customer service management function (CSMF) of the mobile network. Furthermore, the management function comprises and/or the node is adapted to perform the method according to the second aspect, and/or the method according to the third aspect.

The embodiments, advantageous modifications, and further improvements as already described in detail above in connection with the preceding aspects of the invention as well as potential benefits and advantages also apply correspondingly to the node according to the invention.

A fifth aspect not falling under the scope of the claims is directed to a method for operating a customer mode for a mobile network. The mobile network is adapted for implementing one or more network slices. The customer node is adapted for using one or more network slices. The method comprises transmitting a configuration request to the mobile network. The method further comprises receiving at least one network slice configuration identifier from the mobile network. The method further comprises determining whether the at least one network slice configuration identifier matches with a predefined network slice configuration identifier. The method further comprises selectively providing a network status signal depending on the matching.

The embodiments, advantageous modifications, and further improvements as already described in detail above in connection with the preceding aspects of the invention as well as potential benefits and advantages also apply correspondingly to the method for operating a customer node not falling under the scope of the claims. Moreover, performing the matching and providing the network status signal depending on the matching advantageously allows to determine whether a certain network slice configuration identifier, and thus a certain network slice instance defined by the network slice configuration, is provided by the mobile network. Moreover, this may advantageously allow to reduce the computational effort for determining, which network slice instance the mobile network provides.

A sixth aspect not falling under the scope of the claims is directed to a customer node for a mobile network. The mobile network is adapted for implementing one or more network slices. The customer node is adapted for using at least one of the one or more network slices. Furthermore, the customer node is adapted to perform the method for operating a customer node according to the fifth aspect.

The embodiments, advantageous modifications, and further improvements as already described in detail above in connection with the preceding aspects of the invention as well as potential benefits and advantages also apply correspondingly to the customer node not falling under the scope of the claims.

A seventh aspect not falling under the scope of the claims is directed to an automation system. The automation system comprises a customer node according to the sixth aspect. The automation system is adapted to operate in accordance with one or more process modes, in which the automation system monitors, executes, controls and/or regulates a physical process. Furthermore, the automation system is adapted to operate in accordance with at least one failure mode, in which the automation system provides an alarm signal and/or brings one or more processing means into a safe state and/or keeps one or more processing means in a safe state. Furthermore, the automation system is adapted to receive the network status signal, which may be provided by the customer node. Furthermore, the automation system is adapted to selectively operate in accordance with the at least one failure mode, when the network status signal indicates that the at least one network slice configuration identifier does not match with the predefined network slice configuration identifier. It is to be understood, that a missing network status signal may also indicate a network failure, in particular a mismatch between the at least one network slice configuration identifier and the predefined network slice configuration identifier.

The embodiments, advantageous modifications, and further improvements as already described in detail above in connection with the preceding aspects of the invention as well as potential benefits and advantages also apply correspondingly to the automation system. Moreover, selectively operating in accordance with the at least one failure mode beneficially allows improving the security and/or safety - in particular operational safety - of the automation system.

Within the sense of the present disclosure the terms "automation" or "automatic" or "automatically" may refer to a part of a method, in particular a method step and/or a functionality or function of an apparatus being performed without human intervention.

The non-claimed automation system may comprise an automatic production system - such as cloud robotics - or a vehicle adapted for autonomous or automatic driving. Additionally or alternatively the automation system may comprise a control interface for the automatic production system or the vehicle, and in particular for monitoring, controlling and/or regulating the physical process executed by means of the automatic production system or the vehicle.

By ensuring that the at least one network slice configuration identifier matches with the predefined network slice identifier, and thus in particular the mobile network provides the at least one network slice or more specifically its instance, the operational safety of such an autonomous systems may be enhanced.

An eighth aspect not falling under the scope of the claims is directed to a communication system, wherein the communication system comprises a customer node according to the sixths aspect or an automation system according to the seventh aspect. Furthermore, the communication system comprises a mobile network, which is adapted for implementing one or more network slices and to perform the method according to the second aspect, being an aspect of the invention. The mobile network is adapted to provide at least one network slice configuration identifier, which is yielded by the application of the method for identifying at least one network slice configuration according to the first aspect.

Furthermore, the mobile network is adapted to provide the at least one network slice configuration identifier to the customer node.

The embodiments, advantageous modifications, and further improvements as already described in detail above in connection with the preceding aspects of the invention as well as potential benefits and advantages also apply correspondingly to the communication system not falling under the scope of the claims.

The non claimed mobile network may be adapted to establish the at least one network slice configuration by retrieving it from a data storage device for setpoint values of network slice configurations. In some advantageous modifications the communication system, in particular the mobile system comprises the data storage device. This may advantageously allow to determine network slice configuration identifiers based on setpoint values.

Additionally or alternatively, the mobile network may be adapted to establish the at least one network slice configuration by retrieving one or more actual values defining the at least one network slice instance, which the mobile network provides to the customer node. Thereby, the determined at least one network slice configuration identifier advantageously allows to identify the actual instance of the at least one network slice which the mobile network actually provides to the customer node. Thereby, a mismatch between setpoint values and actual values and thus, in particular, assuming a wrong configuration may be avoided. This may advantageously allow to enhance the security of the customer node, and more specifically the operational safety of the automation system.

The non claimed mobile network may be adapted to operate in accordance with one or more platform configurations. Furthermore, the mobile network may comprise an attestation processor adapted to establish attestation data, the attestation data being indicative of an actual platform configuration of the one or more platform configurations. Moreover, the mobile network may be adapted to provide the at least one network slice configuration identifier, wherein the at least one network slice configuration identifier comprises the attestation data.

Within the meaning of the present disclosure an "attestation processor" and/or "attestation data" may refer to the terms as used for remote attestation. In some implementations the attestation processor may comprise a cryptoprocessor or trusted platform module.

The non claimed customer node may be adapted to receive the at least one network slice configuration identifier which comprises the attestation data. Furthermore, the customer node may be adapted to perform an attestation check based on the attestation data. Furthermore, the customer node may be adapted to selectively provide the network status signal depending on the attestation check.

An advantage of providing the at least one network slice configuration identifier comprising the attestation data and/or performing the attestation check based on the attestation data may particularly be, that the security and/or operational safety of the communication system may be enhanced. Therefore, the validity of the at least one network slice configuration and thus the at least one network slice configuration identifier matching the instance of the network slice, which is actually provided by the mobile network, may be enforced.

In some examples not falling under the scope of the claims which establish, provide, receive or use attestation data, the attestation data and preferably also the at least one network slice configuration identifier may be digitally signed. Thereby, the security may be improved.

In particular, to beneficially make spoofing attacks more difficult, or preferably to prevent spoofing attacks, in some embodiments the at least one network slice configuration identifier may be digitally signed.

A tenth aspect not falling under the scope of the claims is directed to a communication system. The communication system comprises a mobile network, wherein the mobile network is adapted for implementing one or more network slices and to perform the method according to the third aspect. The communication system further comprises a customer node, which is adapted for using a further one of the one or more network slices. Moreover, the customer node is further adapted to establish a further network slice configuration identifier and to transmit a configuration request to the mobile network, wherein the configuration request at least comprises the further network slice configuration identifier.

The embodiments, advantageous modifications, and further improvements as already described in detail above in connection with the preceding aspects of the invention as well as potential benefits and advantages also apply to the communication system according not falling under the scope of the claims correspondingly.

According to some examples the non-claimed customer node is adapted to establish a customer node identifier.

In particular for establishing the customer node identifier, in some advantageous modifications, the customer node may comprise an identification unit such as a universal integrated circuit card (UICC), a SIM card, or an R-UIM card.

In some examples in which the customer node establishes a customer node identifier, the customer node is adapted to transmit the configuration requests to the mobile network, wherein the configuration request may further comprise the customer node identifier.

According to some examples the non claimed mobile network comprises a permission assignment structure. The permission assignment structure assigns permissions regarding an access of the mobile network to predetermined customer node identifiers and/or network slice configuration identifiers. Furthermore, the mobile network is adapted to perform a permission check by means of the permission assignment structure and based on the customer node identifier and the network slice configuration identifier of the configuration requests, indicating whether the customer node is permitted to connect to the mobile network and to use a network slice instance defined by the network slice configuration identifier. The mobile network is further adapted to selectively provide the network slice instance depending on the permission check.

In some advantageous modifications the customer node identifier may comprise an international mobile subscriber identity (IMSI).

Thereby, the security of the communication system may be improved.

According to some examples the non-claimed mobile network comprises a database for storing one or more network slice configurations and respective network slice configuration identifiers. Furthermore, the mobile network is adapted to retrieve the further network slice configuration from the database based on the further network slice configuration identifier of the configuration request. According to some advantageous modifications the mobile network may be adapted to store at least one network slice configuration and its respective identifier in the database. Additionally or alternatively the mobile network may be adapted to generate at least one network slice configuration identifier by performing the method according to the first aspect. Moreover, several network slice configurations may be stored in the database by the mobile network, wherein the respective identifiers are generated by performing the method according to the first aspect. An advantage of retrieving the further network slice configuration from the database may particularly be, that this advantageously allows to retrieve the further network slice configuration - i.e. to establish the further network slice configuration - in a computationally efficient way.

According to some embodiments the mobile network is adapted to transmit a broadcast message comprising at least one and/or a further network slice configuration identifier.

In some examples in which a broadcast message - in particular of the mobile network - comprises at least one and/or a further network slice configuration identifier, the customer node may be adapted to receive the broadcast message and to establish the at least one or the further network slice configuration identifier by retrieving it from the broadcast message.

An advantage of the broadcast message comprising a network slice configuration identifier may particularly be, that the mobile network may advertise certain network slice configurations, which it may provide to a customer node, when the customer node requests such a network slice configuration.

According to some examples the non-claimed customer node comprises a data storage unit for storing one or more network slice configuration identifiers. Furthermore, the customer node is adapted to operate in accordance with at least one process mode and at least one setup mode. The customer node is further adapted to generate or receive the further network slice configuration identifier and to store it on the data storage unit, when operating in the at least one setup mode. The customer node is further adapted to establish the further network slice configuration identifier by retrieving it from the data storage unit, when operating in the at least one process mode. Thereby, the customer node may be set up to use a certain network slice configuration - i.e. identified by the further network slice configuration identifier - which may, in particular, facilitate network slicing. Moreover, this may allow to improve the security of the customer node or a system comprising such a customer node by ensuring that the customer node requests a network slice configuration according to the further network slice configuration being stored during setup.

In some examples the non-claimed communication system is adapted according to the ninth aspect and according to the tenth aspect. Moreover, the further network slice configuration identifier and the at least one network slice configuration identifier correspond to each other. Moreover, the further network slice configuration identifier is equal to the predefined network slice configuration identifier. Therefore, the customer node is adapted to transmit the configuration request, which comprises the predefined network slice configuration identifier as the further network slice configuration identifier. Furthermore, the customer node is adapted to receive the at least one network slice configuration identifier, which is indicative of the at least one network slice configuration identifier, which defines that at least one network slice instance provided by the mobile network to the customer node. Finally, the customer node is adapted to determine whether the at least one network slice configuration identifier matches with the further network slice configuration identifier of the configuration request.

Thereby, the customer node may, at first, request at least one network slice configuration by the at least one network slice configuration identifier and, after the mobile network provides an instance according to the at least on network slice configuration identified by the at least one network slice configuration identifier, the customer node may check, whether the provided instance actually matches the requested instance. This may therefore provide an enhanced security, when using network slicing.

The above summary is merely intended to give a short overview over some features of some embodiments and implementations and is not to be construed as limiting. Other embodiments may comprise other features than the ones explained above, within the scope defined by the claims.

### Brief Description of the Drawings

The above and other embodiments, advantageous modifications, further improvements, elements, features, steps, and characteristics of the present disclosure will be more apparent from the following detailed description of exemplary embodiments and the appended figures. When not stated otherwise or following otherwise from the context, like reference signs refer to corresponding apparatuses, elements or features of the exemplary embodiments and throughout the figures.
- Figure 1: represents a flow chart of a method for identifying at least one network slice configuration.

- Figure 2: represents a flow chart of a method for operating a mobile network.
- Figure 3: represents a flow chart of another method for ope ating a mobile network.

- Figure 4: represents a flow chart of a method for operating a customer node.
- Figure 5: schematically illustrates a customer node for a m bile network.
- Figure 6: schematically illustrates an automation system.

- Figure 7: schematically illustrates a communication system.

### Detailed Description of Exemplary Embodiments

In the following, various embodiments of the invention will be described in detail with reference to the appended figures. It is to be understood that the following description of embodiments is not to be taken in a limiting sense. The scope of the invention is defined by the appended claims and is not intended to be limited by the embodiments described hereinafter or by the figures, which are taken to be illustrative only.

The figures are to be regarded as being schematic representations and elements illustrated in the figures, which are not necessarily shown to scale. Rather, the various elements are represented such that their function and general purpose become apparent to a person skilled in the art. Any connectional coupling between functional blocks, devices, components or other physical or functional units shown in the figures or described herein may also be implemented by an indirect connectional coupling. A coupling between components may be established over a wireless connection. Functional blocks may be implemented in hardware, firmware, software or a combination thereof.

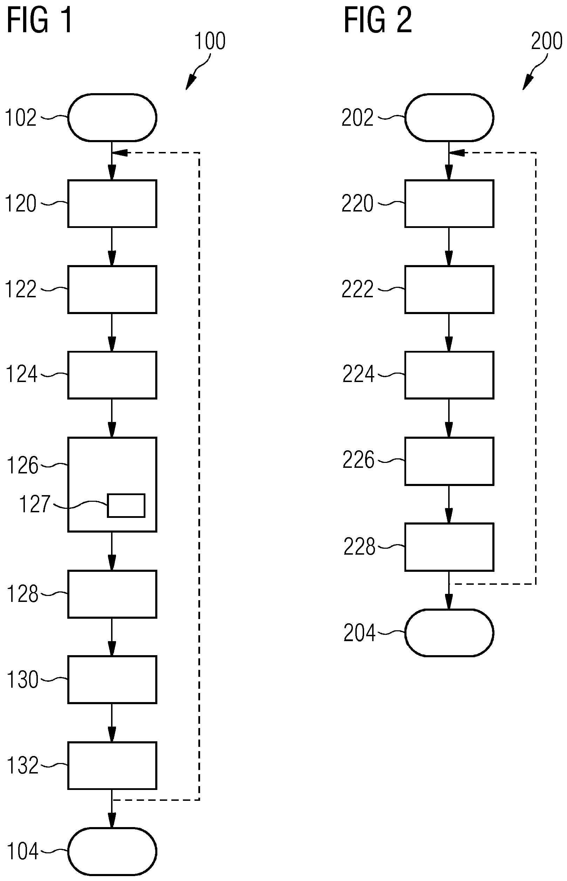

In figure 1 a flow chart of a method 100 for identifying at least network slice configuration of a mobile network according to an embodiment is shown.

In an exemplary embodiment the method 100 comprises the method steps 120, 122, 124, 126, 127, 128, 130 and 132. The method 100 starts at the start of the method 102 and ends at the end of method 104, wherein one or more of the method steps, in particular a sequence of method steps, and in particular the whole method, may be performed repeatedly.

According to an exemplary embodiment, the mobile network is adapted for implementing network slicing with one or more network slices. Furthermore, the mobile network is adapted to provide at least one network slice instance, which is an instance of the network slices and which is defined by the at least one network slice configuration.

At step 120, the at least one network slice configuration is received.

At step 122, a mapping from a set of network slice configurations to a set of network slice configuration identifiers is provided. According to some advantageous modifications the mapping may be implemented by an algorithm, in particular a computer program or a function of it, which may be executed on a data processing apparatus.

At step 124, a canonical form of the at least one network slice configuration is determined. In some advantageous modifications, in which the at least one network slice configuration is represented by a configuration file, the configuration file may be transformed to a respective canonical form by removing white spaces and/or sorting parameters given in the configuration file according to a predetermined - i.e. alphabetical - order. In some additional or alternative advantageous modifications, in which the at least one network slice configuration may be given as a configuration file or as a set of setpoint values or actual values, in particular of parameters defining the at least one network slice configuration, an XML-file may be generated based on the at least one network slice configuration and/or its respective parameters, such that the XML-file is indicative of the at least one network slice configuration. Then, for determining the canonical form, the XML-file may be normalised.

At step 126, the mapping is applied to the at least one network slice configuration. According to some advantageous modifications, the mapping comprises step 127, wherein a hash value of the mapped network slice configuration is computed. In particular, applying the mapping 126 may be implemented by step 127, and thus computing a hash value of the at least one network slice configuration.

At step 128, the network slice configuration identifier, which identifies the at least one network slice configuration, is determined by applying the mapping according to steps 126 and 127.

At method step 130, the at least one network slice configuration identifier may be extended by meta data. According to some advantageous modifications the meta data may comprise a time code of creation of the at least one network slice configuration. Thereby, possible collisions of different network slice configurations resulting in the same hash value may be avoided or compensated.

At method step 132, the network slice configuration identifier is provided. According to some advantageous modifications the network slice instance and the respective network slice configuration identifier may be provided to the mobile network or a customer node.

Figure 2 represents a flow chart of a method 200 for operating a mobile network according to an embodiment of the invention.

In an exemplary embodiment the method 200 comprises the method steps 220, 222, 224, 226 and 228. The method 200 starts at the start of the method 202 and ends at the end of the method 204. Furthermore, one or more of the method steps, in particular a sequence of method steps and/or the whole method 200 may repeatedly be performed. Moreover, the mobile network may be adapted for implementing one or more network slices.

At step 220 a configuration request is received. According to some advantageous modifications the configuration request may be transmitted by a customer node. Moreover, the configuration request may indicate that a network slice configuration identifier is requested. Furthermore, the configuration request may indicate a request for identification of a network slice configuration, which defines a network slice instance being provided to a requesting customer node.

At step 222, at least one network slice configuration is established.

At step 224, at least one network slice instance is provided, wherein the at least one network slice instance is an instance of one of the network slices and is defined by the at least one network slice configuration.

According to some advantageous modifications the mobile network may readily provide the at least one network slice instance based on a prior instantiation based on a previously established, in particular stored and retrieved network slice configuration, such that the at least one network slice configuration is derived from the previously instantiated network slice instance.

According to some advantageous modifications the at least one network slice configuration may be established by retrieving one or more actual values defining the at least one network slice instance, which the mobile network provides to a customer node.

At step 226, the method for identifying at least one network slice configuration is applied to the at least one network slice configuration. The method for identifying at least one network slice configuration is according to an embodiment of the present disclosure, and may in particular be according to an exemplary embodiment of the method 100 given with reference to figure 1.

At step 228, according to some advantageous modifications, the at least one network slice configuration identifier may be provided to the customer node, which transmitted the configuration request.

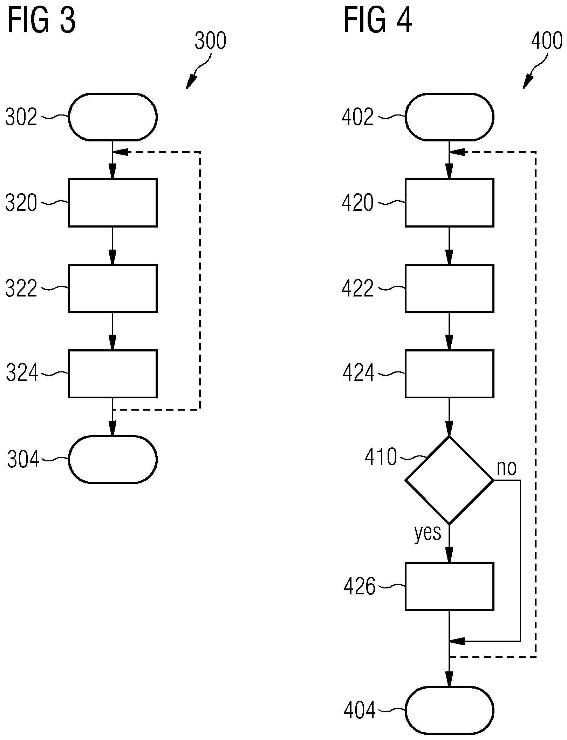

Figure 3 shows a flow chart of another method 300 for operating a mobile network according to another embodiment of the invention.

In an exemplary embodiment the method 300 comprises the method steps 320, 322 and 324. The method 300 begins at the start of the method 302 and ends at the end of the method 304. Furthermore, one or more of the method steps, in particular a sequence of method steps or the whole method may repeatedly be performed. Moreover, the mobile network may be adapted for implementing one or more network slices.

At step 320, a configuration request comprising a further network slice configuration identifier is received.

At step 322, a further network slice configuration is established, such that applying the method for identifying at least one network slice configuration to the further network slice configuration yields the further network slice configuration identifier of the configuration request. The method for identifying at least one network slice configuration is according to an embodiment of the present disclosure, and may in particular be according to an exemplary embodiment of the method 100 given with reference to figure 1.

According to some advantageous modifications, the further network slice configuration may be established by retrieving it from a database, which stores at least the further network slice configuration and the further network slice configuration identifier. Thereby, the further network slice configuration may be established in a computational efficient way.

At step 324, a further network slice instance is instantiated as an instance of one of the network slices, wherein the instance is defined by the further network slice configuration. Furthermore, the network slice instance is provided, in particular, to a customer node.

Figure 4 represents a flow chart of a method 400 for operating a customer node for a mobile network according to an embodiment.

In an exemplary embodiment the mobile network may be adapted for implementing one or more network slices and the customer node may be adapted for using one or more network slices.

In an exemplary embodiment the method 400 comprises the method steps 420, 422, 424 and 426 and a method condition 410. The method 400 starts at the start of the method 402 and ends at the end of the method 404. Furthermore, one or more of the method steps, in particular a sequence of method steps and preferably the whole method may be performed, repeatedly.

At step 420, a configuration request is transmitted to the mobile network.

At step 422, at least one network slice configuration identifier is received from the mobile network.

At step 424, it is determined, whether the at least one network slice configuration identifier matches with a predefined network slice configuration identifier. According to some advantageous modifications the predefined network slice configuration identifier may be retrieved from a data storage unit of the customer node.
The step 426 is performed, if according to the condition 410 the at least one network slice configuration identifier matches with the predefined network slice configuration identifier. Then, in step 426, a network status signal is provided, which indicates the positive matching, and thus particularly indicates that an instance of a network slice according to the at least one network slice configuration is be provided to the customer node.

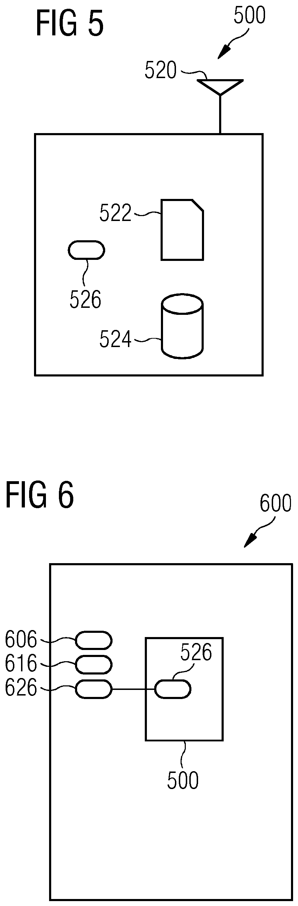

In figure 5 a customer node 500 for a mobile network according to an embodiment of the invention is schematically shown.

According to an exemplary embodiment the customer node 500 is adapted for using at least one of one or more network slices, wherein the mobile network is adapted for implementing the one or more network slices. Furthermore, the customer node 500 is adapted to perform the method for operating a customer node for a mobile network. The method for operating a customer node for a mobile network is according to an embodiment of the present disclosure, and may in particular be according to an exemplary embodiment of the method 400 given with reference to figure 4.

According to an exemplary embodiment the customer node 500 comprises a wireless communication unit 520, a data processing unit 522, a data storage unit 524 and a network status interface 526, in particular for performing the method 400. The wireless communication unit 520 may comprise a transmitter unit, a receiver unit and an antenna, such that the customer node 500 may establish a data connection to the mobile network.

In an advantageous modification, the customer node 500 may be adapted to retrieve the predefined network slice configuration identifier from the data storage unit 524.

In an advantageous modification, the customer node 500 may be adapted to determine whether the predefined network slice configuration identifier matches with the at least one network slice configuration identifier by computing a matching value by means of the data processing unit 522.

Moreover, the customer node 500 may be adapted to provide the network status signal by means of the network status interface 526.

According to an exemplary embodiment the customer node 500 may further comprise an identification unit 528. In some advantageous implementations, the identification unit 528 may be implemented as a universal integrated circuit card, a SIM card or an R-UIM card, which may provide an international mobile subscriber identity (IMSI). Thereby, the customer node 500 may advantageously provide a customer node identifier to the mobile network, whereby, in particular, the security of using the mobile network may be enhanced.

Figure 6 schematically illustrates an automation system 600 according to an embodiment.

In an exemplary embodiment the automation system 600 comprises a customer node 500. The customer node 500 is according to an embodiment of the present disclosure, and may in particular be according to an exemplary embodiment of the customer node 500 given with reference to figure 5.

Furthermore, the automation system 600 is adapted to operate in accordance with one or more process modes, in which the automation system 600 monitors, executes, controls and/or regulates a physical process. According to some advantageous modifications, for monitoring, executing, controlling and/or regulating the physical process, the automation system 600 may comprise a control interface 606. The control interface 606 may be adapted to establish a data connection to an apparatus such as an actuator or manufacturing system, which implements the physical process.

The automation system 600 is further adapted to operate in accordance with at least one failure mode, in which the automation system provides an alarm signal and/or brings one or more processing means into a safe state and/or keeps one or more processing means in a safe state. In particular, one of the processing means may be the actuator or the manufacturing system. Moreover, according to some advantageous modifications, for providing the alarm signal, the automation system 600 may comprise an interface for an alarm 616 and/or a device for generating an alarm signal such as a sound source or a light source.

Finally, the automation system 600 is further adapted to receive the network status signal and to selectively operate in accordance with the at least one failure mode, when the network status signal indicates that at least one network slice configuration does not match with the predefined network slice configuration identifier. It is to be understood, that, vice versa, a missing network status signal might also indicate a mismatch between at least one network slice configuration identifier and the predetermined network slice configuration identifier. For receiving the network status signal the automation system 600 may comprise a network status interface 626, which is connected to the network status interface 526 of the customer node 500.

Figure 6 has shown an automation system 600 according to an embodiment. Similarly, further embodiments may be realized as cyber physical systems, as vehicle, as robot, or as an Internet of Things system.

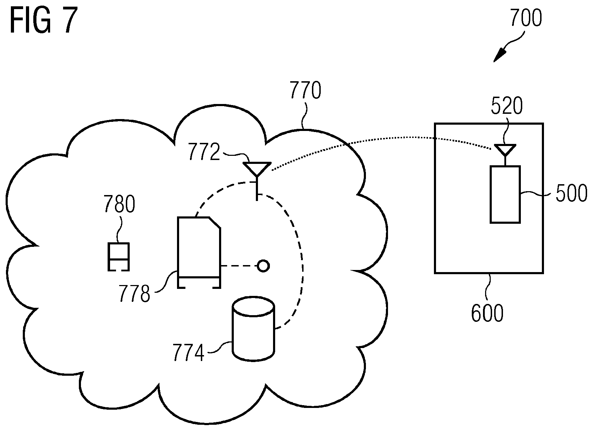

Figure 7 schematically illustrates a communication system 700 according to an embodiment.

According to an exemplary embodiment, the communication system 700 may comprise an automation system 600 with a customer node 500 and further comprise a mobile network 770, wherein the mobile network 770 is adapted for implementing one or more network slices. The customer node 500 is according to an embodiment of the present disclosure, and may in particular be according to an exemplary embodiment of the customer node 500 given with reference to figure 5. The automation system 600 is according to an embodiment of the present disclosure, and may in particular be according to an exemplary embodiment of the automation system 600 given with reference to figure 6.

Furthermore, the mobile network 770 is adapted to perform the method for operating a mobile network, which is according to an embodiment of the present disclosure, and may in particular be according to an exemplary embodiment of the method 200 given with reference to figure 2.

Moreover, the mobile network 770 is adapted to provide at least one network slice configuration identifier to the customer node 500, wherein the at least one network slice configuration identifier is yielded by the application of the method for identifying at least one network slice configuration, which is performed as a submethod of the method 200. The method for identifying at least one network slice configuration is according to an embodiment of the present disclosure, and may in particular be according to an exemplary embodiment of the method 100 given with reference to figure 1.

In an advantageous modification, the mobile network 770 may comprise a wireless communication station 772, wherein the wireless communication station 772 is adapted to establish a data connection and/or use a data connection to the wireless communication unit 520 of the customer node 500 of the automation system 600.

In an advantageous modification, the communication system 700 may comprise a database 774 for storing one or more network slice configurations and respective network slice configuration identifiers. Furthermore, the mobile network 770 may advantageously be adapted to receive a configuration request comprising a further network slice identifier and to retrieve a further network slice configuration from the database 774 based on the further network slice configuration identifier. Furthermore, the mobile network 770 may advantageously be adapted to provide a further network slice instance to the customer node 500 and/or the automation system 600, wherein the further network slice instance is defined by the further network slice configuration.

According to some further improvements, the communication system 700 or, in particular, the mobile network 770 may comprise an attestation processor 778. The attestation processor 778 is adapted to establish attestation data, which is indicative of an actual platform configuration, in accordance with which the mobile network 770 currently operates. Furthermore, the mobile network 770 may be advantageously adapted to provide at least one network slice configuration identifier, which identifies the configuration, according to which the currently provided network slice instance is defined, wherein the at least one network slice configuration identifier further comprises the attestation data. Thereby, the customer node 500 of the automation system 600 may receive the at least one network slice configuration identifier comprising the attestation data and perform an attestation check based on the attestation data. This may advantageously allow to improve the security of the communication system 700 by not only indicating the configuration of the currently provided/used network slice instance but also by attestation of the currently provided network slice instance. This may have the advantage that it can be ensured, that a certain network slice instance with a certain network slice configuration is actually served. This may be especially beneficial for applications which require a narrow specification of operating parameters and/or require an approval for operation or a technical inspection. In particular, an autonomous car, an automated train, an automated vessel, an automated plane, an unmanned air vehicle, an automated chemical production site, a robot, a train interlocking system, an energy automation system, and/or an automatic power plant may be such applications.

According to some advantageous modifications, the mobile network 770 may comprise a permission assignment structure 780. The permission assignment structure 780 assigns permissions regarding an access of the mobile network 770 to predetermined customer node identifiers and/or network slice configuration identifiers. Furthermore, the mobile 770 may be adapted to perform a permission check by means of the permission assignment structure 780 and based on a customer node identifier provided by the customer node 500 of the automation system 600 and based on the network slice configuration identifier of the configuration request. Therefore, the mobile network 770 may determine whether the customer node 500 or the automation system 600 is permitted to access the mobile network 770 and to use a network slice instance indicated by the network slice configuration identifier. Thereby, a non-permitted use of the mobile network and/or an insecure operation of the communication systems 700 may be avoided.

## Claims

1. A method (200) for operating a mobile network adapted for implementing one or more network slices, the method comprising:
- establishing (222) at least one network slice configuration;
- providing (224), to a customer node, at least one network slice instance, the at least one network slice instance being an instance of one of the network slices and being defined by the at least one network slice configuration;
- receiving (220), from the customer node, a configuration request that indicates a request for identification of the at least one network slice configuration which defines the at least one network slice instance being provided to the customer node;
**characterized in that** the method comprises:
- providing (122) a mapping from a set of network slice configurations to a set of network slice configuration identifiers, wherein the mapping comprises respectively computing (127) a hash value of the mapped network slice configurations;
- determining (128) a network slice configuration identifier for the at least one network slice configuration by applying (126) the mapping to the at least one network slice configuration; and
- providing (228) the at least one network slice configuration identifier to the customer node.

2. The method (100) according to claim 1, wherein the elements of the set of network slice configuration identifiers each have a predetermined maximum length, wherein the predetermined maximum length is less than the largest maximum length of the elements of the set of network slice configurations.

3. The method (100) according to any one of the preceding claims, further comprising:
- determining (124) a canonical form of the at least one network slice configuration; and
- applying (126) the mapping to the canonical form.

4. A node for implementing a management function of a mobile network, wherein the node is adapted to perform the method of claim 1.

## Patentansprüche

1. Verfahren (200) zum Betrieb eines mobilen Netzwerks, das angepasst ist, ein oder mehr Netzwerk-Slices zu implementieren, wobei das Verfahren Folgendes umfasst:
- Ausbilden (222) mindestens einer Netzwerk-Slice-Konfiguration,
- Bereitstellen (224), für einen Kundenknoten, mindestens einer Netzwerk-Slice-Instanz, wobei die mindestens eine Netzwerk-Slice-Instanz eine Instanz von einer der Netzwerk-Slices ist und durch die mindestens eine Netzwerk-Slice-Konfiguration definiert ist,
- Empfangen (220), von dem Kundenknoten, einer Konfigurationsanfrage, die eine Anfrage zur Identifizierung der mindestens einen Netzwerk-Slice-Konfiguration anzeigt, die die mindestens eine Netzwerk-Slice-Instanz definiert, die für den Kundenknoten bereitgestellt wird,
**dadurch gekennzeichnet, dass** das Verfahren Folgendes umfasst:
- Bereitstellen (122) einer Zuordnung von einem Satz von Netzwerk-Slice-Konfigurationen zu einem Satz von Netzwerk-Slice-Konfigurationsidentifikatoren, wobei die Zuordnung jeweiliges Berechnen (127) eines Hash-Werts der zugeordneten Netzwerk-Slice-Konfigurationen umfasst,
- Bestimmen (128) eines Netzwerk-Slice-Konfigurationsidentifikators für die mindestens eine Netzwerk-Slice-Konfiguration durch Anwenden (126) der Zuordnung auf die mindestens eine Netzwerk-Slice-Konfiguration und
- Bereitstellen (228) des mindestens einen Netzwerk-Slice-Konfigurationsidentifikators für den Kundenknoten.

2. Verfahren (100) nach Anspruch 1, wobei die Elemente des Satzes von Netzwerk-Slice-Konfigurationsidentifikatoren jeweils eine vorbestimmte maximale Länge aufweisen, wobei die vorbestimmte maximale Länge kleiner als die größte maximale Länge der Elemente des Satzes von Netzwerk-Slice-Konfigurationsidentifikatoren ist.

3. Verfahren (100) nach einem der vorhergehenden Ansprüche, ferner umfassend:
- Bestimmen (124) einer kanonischen Form der mindestens einen Netzwerk-Slice-Konfiguration und
- Anwenden (126) der Zuordnung auf die kanonische Form.

4. Knoten zur Implementierung einer Managementfunktion eines mobilen Netzwerks, wobei der Knoten angepasst ist, das Verfahren von Anspruch 1 auszuführen.

## Revendications

1. Procédé (200) d'actionnement d'un réseau mobile adapté à la mise en œuvre d'une ou de plusieurs tranches de réseau, le procédé comprenant :
- l'établissement (222) d'au moins une configuration de tranche de réseau,
- la fourniture (224), à un nœud client, d'au moins une instance de tranche de réseau, la au moins une instance de tranche de réseau étant une instance d'une des tranches de réseau et étant définie par la au moins une configuration de tranche de réseau,
- la réception (220), à partir du nœud client, d'une demande de configuration qui indique une demande d'identification de la au moins une configuration de tranche de réseau qui définit la au moins une instance de tranche de réseau qui est fournie au nœud client,
**caractérisé en ce que** le procédé comprend :
- la fourniture (122) d'une mise en correspondance à partir d'un ensemble de configurations de tranche de réseau avec un ensemble d'identifiants de configuration de tranche de réseau, la mise en correspondance comprenant respectivement le calcul (127) d'une valeur de hachage des configurations de tranche de réseau mises en correspondance,
- la détermination (128) d'un identifiant de configuration de tranche de réseau pour la au moins une configuration de tranche de réseau par l'application (126) de la mise en correspondance à la au moins une configuration de tranche de réseau, et
- la fourniture (228) du au moins un identifiant de configuration de tranche de réseau au nœud client .

2. Procédé (100) selon la revendication 1, dans lequel les éléments de l'ensemble d'identifiants de configuration de tranche de réseau possèdent chacun une longueur maximale prédéterminée, la longueur maximale prédéterminée étant inférieure à la longueur maximale la plus élevée des éléments de l'ensemble de configurations de tranche de réseau.

3. Procédé (100) selon l'une quelconque des revendications précédentes, comprenant en outre :
- la détermination (124) d'une forme canonique de la au moins une configuration de tranche de réseau, et
- l'application (126) de la mise en correspondance à la forme canonique.

4. Nœud destiné à la mise en œuvre d'une fonction de gestion d'un réseau mobile, le nœud étant adapté de façon à exécuter le procédé selon la revendication 1.
